# EUROPÄISCHE PATENTANMELDUNG

(11) **EP 2 978 168 A1**
(43) Veröffentlichungstag der Anmeldung: **27.01.2016**
(21) Anmeldenummer: 14177808.4
(22) Anmeldetag: 21.07.2014
(51) Int. Cl.: H04L 12/40, H04L 12/26, H04L 12/46, H04L 12/721, H04L 12/707, H04L 12/931

(54) **Verfahren zur Nachbildung von entsprechenden Laufzeiten eines segmentierten Netzwerkes**

(71) Anmelder: dSPACE digital signal processing and control engineering GmbH, 33102 Paderborn (DE)
(72) Erfinder: Müller, Björn, 59557 Lippstadt (DE)

(57) **Zusammenfassung**

Verfahren zur Nachbildung von Laufzeiten, wobei ein erster Netzwerkteil-nehmer über eine erste Netzwerkleitung mit einem Netzwerkgateway verbunden wird und ein zweiter Netzwerkteilnehmer über eine zweite Netz-werkleitung mit dem Netzwerkgateway verbunden wird, wobei der erste Netzwerkteilnehmer eine erste, an den zweiten Netzwerkteilnehmer adressierte Nachricht über die erste Netzwerkleitung verschickt, wobei von dem Netzwerkgateway die erste Nachricht über die erste Netzwerkleitung empfangen wird und an den zweiten Netzwerkteilnehmer über die zweite Netzwerkleitung versendet wird, wobei von dem zweiten Netzwerkteilnehmer die erste Nachricht über die zweite Netzwerkleitung empfangen wird, wobei die erste Nachricht mittels des Netzwerkgateways derart verzögert wird, dass eine erste Laufzeit der ersten Nachricht von dem ersten Netzwerkteilnehmer zu dem zweiten Netzwerkteilnehmer im Wesentlichen einer zweiten Laufzeit der ersten Nachricht durch ein segmentiertes Netzwerk entspricht, wobei das segmentierte Netzwerk wenigstens ein erstes Segmentkopplungselement und ein zweites Segmentkopplungselement und eine mit dem ersten Segmentkopplungselement und dem zweiten Segmentkopplungselement verbundene dritte Netzwerkleitung umfasst.

## Beschreibung

Die Erfindung betrifft ein Verfahren zur Nachbildung von Laufzeiten.

Netzwerke wie beispielsweise Ethernetnetzwerke können über Segmentkopplungselemente wie beispielsweise Switche oder Gateways segmentiert werden. Solche segmentierten Netzwerke weisen gegenüber Netzwerken in z.B. Sterntopologie bedingt durch die Verarbeitung der Nachrichten in den Segmentkopplungselementen andere Laufzeiten auf.

Vor diesem Hintergrund besteht die Aufgabe der Erfindung darin, ein Verfahren und eine Vorrichtung anzugeben, die den Stand der Technik weiterbilden.

Die Aufgabe wird durch ein Verfahren und durch eine Vorrichtung mit den Merkmalen des Patentanspruchs 1 und des Patentanspruchs 14 gelöst. Vorteilhafte Ausgestaltungen der Erfindung sind Gegenstand von Unteransprüchen.

Gegenstand der Erfindung ist ein Verfahren zur Nachbildung von Laufzeiten, wobei ein erster Netzwerkteilnehmer über eine erste Netzwerkleitung mit einem Netzwerkgateway verbunden wird und ein zweiter Netzwerkteilnehmer über eine zweite Netzwerkleitung mit dem Netzwerkgateway verbunden wird, wobei der erste Netzwerkteilnehmer eine erste, an den zweiten Netzwerkteilnehmer adressierte Nachricht über die erste Netzwerkleitung verschickt, wobei von dem Netzwerkgateway die erste Nachricht über die erste Netzwerkleitung empfangen wird und an den zweiten Netzwerkteilnehmer über die zweite Netzwerkleitung versendet wird, wobei von dem zweiten Netzwerkteilnehmer die erste Nachricht über die zweite Netzwerkleitung empfangen wird, wobei die erste Nachricht mittels des Netzwerkgateways derart verzögert wird, dass eine erste Laufzeit der ersten Nachricht von dem ersten Netzwerkteilnehmer zu dem zweiten Netzwerkteilnehmer im Wesentlichen oder genau einer zweiten Laufzeit der ersten Nachricht durch ein segmentiertes Netzwerk entspricht, wobei das segmentierte Netzwerk wenigstens ein erstes Segmentkopplungselement und ein zweites Segmentkopplungselement und eine mit dem ersten Segmentkopplungselement und dem zweiten Segmentkopplungselement verbundene dritte Netzwerkleitung umfasst.

Es sei angemerkt, dass unter einer genauen Entsprechung der ersten Laufzeiten zur zweiten Laufzeit, dass die ersten Laufzeit von der zweiten Laufzeit weniger als 1% abweicht. Unter einer wesentlichen Entsprechung der ersten Laufzeiten zur zweiten Laufzeit wird verstanden, dass die erste Laufzeit von der zweiten Laufzeit weniger als 10% abweicht.

Ein Vorteil des erfindungsgemäßen Verfahrens ist es, dass die Netzwerkteilnehmer in einer einfachen Sterntopologie mit dem Netzwerkgateway verbunden werden und sich die Laufzeiten der Nachrichten durch das Netzwerkgateway dennoch nicht wesentlich von den Laufzeiten durch das segmentierte Netzwerk unterscheiden. Durch die Simulation ist es möglich verschiedene Topologien von segmentierten Netzwerken nachzubilden ohne die Verkabelung der Netzwerkteilnehmer zu ändern.

Untersuchungen der Anmelder haben gezeigt, dass durch die Simulation unterschiedlicher Topologien die Vor- und Nachteile der Topologien und unterschiedlicher Konfigurationen von Netzwerkteilnehmern und Segmentkopplungselementen schneller evaluiert werden können. Beispielsweise können Engpässe in der Kommunikation bzw. hoch belastete Netzwerkleitungen aufgespürt werden. Durch das Netzwerkgateway wird nachgebildet welche Laufzeiten verschiedene Nachrichten durch ein segmentiertes Netzwerk haben. Durch die Nachbildung der Verzögerung verschiedener segmentierter Netzwerke können diese Netzwerke effektiv verglichen oder nachgebildet oder simuliert werden.

Es ist anzumerken, dass im Falle komplexer segmentierter Netzwerke mit eine Vielzahl von angeschlossenen Netzwerkleitungen unterschiedliche Nachrichten über unterschiedliche Netzwerkleitungen in das segmentierte Netzwerk eingebracht und ausgegeben werden können. Auch können unterschiedliche Nachrichten unterschiedliche Wege durch das segmentierte Netzwerk nehmen. Daher sind die Laufzeiten der Nachrichten durch das segmentierte Netzwerk im Allgemeinen unterschiedlich. Erfindungsgemäß wird daher die Verzögerung der Nachrichten durch das Netzwerkgateway für jede Nachricht individuell ermittelt. Maßgeblich für die Bestimmung des Weges der Nachricht durch das segmentierte Netzwerk können beispielsweise die Absende und/oder Zieladresse der Nachricht sein. Die Laufzeit durch das segmentierte Netzwerk wird dann für jede Nachricht individuell von dem Netzwerkgateway nachgebildet.

Unter einem Netzwerkteilnehmer wird hier ein Netzwerkendgerät oder auch eine untereinander verbundene Gruppe von Netzwerkendgeräten verstanden. Ein Netzwerkendgerät kann auch ein Simulator sein, der ein Netzwerk-endgerät oder eine untereinander verbundene Gruppe von Netzwerkendgeräten simuliert. Ein solcher Simulator kann auch zusammen mit dem Netzwerkgateway in einem Gehäuse untergebracht werden.

In einer bevorzugten Ausführungsform wird bei der Verzögerung der ersten Nachricht die Verarbeitungszeit der ersten Nachricht durch die Segmentkopplungselemente berücksichtigt.

Ein Vorteil ist, dass durch die Berücksichtigung der Verarbeitungszeit der ersten Nachricht durch die Segmentkopplungselemente die im Allgemeinen wichtigste Quelle von Laufzeitverzögerungen in dem segmentierten Netzwerk nachgebildet wird. Unterschiedliche Segmentkopplungselemente können unterschiedliche Verarbeitungszeiten haben.

In einer Weiterbildung wird bei der Verzögerung der ersten Nachricht die Laufzeit der ersten Nachricht zwischen den Segmentkopplungselementen berücksichtigt.

Vorteilhaft ist, dass durch die Berücksichtigung der Laufzeit der ersten Nachricht zwischen den Segmentkopplungselementen auch Laufzeitverzögerungen durch lange Netzwerkleitungen im segmentierten Netzwerk nachgebildet werden.

In einer Ausführungsform ist es bevorzugt, dass das segmentierte Netzwerk ein Ethernetnetzwerk und/oder ein FlexRay-Netzerk und/oder ein CAN-Netzwerk und/oder ein LIN-Netzwerk und/oder ein MOST-Netzwerk umfasst. Auch ist es möglich, dass das segmentierte Netzwerk einen CAN-Bus und/oder einen LIN-Bus umfasst.

Gemäß einer anderen Weiterbildung wird in dem segmentierten Netzwerk zwischen dem ersten Segmentkopplungselement und dem zweiten Segmentkopplungselement eine zweite Nachricht übertragen und von dem Netzwerkgateway wird bei der Verzögerung der ersten Nachricht eine zusätzliche Verzögerung durch die Übertragung der zweiten Nachricht berücksichtigt.

Vorteilhaft ist, dass durch die Berücksichtigung der Übertragung der zweiten Nachricht eine zeitweilige Blockade der Netzwerkleitung zwischen dem ersten Segmentkopplungselement und dem zweiten Segmentkopplungselement und die dadurch entstehende Verzögerung der Übertragung der ersten Nachricht nachgebildet wird.

Es ist hierbei unerheblich, ob die zweite Nachricht von dem ersten Segmentkopplungselement oder dem zweiten Segmentkopplungselement vor der Versendung über die dritte Netzwerkleitung empfangen wird oder direkt von dem ersten Segmentkopplungselement oder dem zweiten Segmentkopplungselement erzeugt wird. Wenn die Nachrichtenübertragung zwischen dem ersten Segmentkopplungselement und dem zweiten Segmentkopplungselement im Vollduplexbetrieb durchgeführt wird, ist bei der Verzögerung der ersten Nachricht nur die Verzögerung zu berücksichtigen, die durch die Übertragung einer zweiten Nachricht vom ersten Segmentkopplungselement zum zweiten Segmentkopplungselement entsteht.

In einer Weiterbildung weist die zweite Nachricht eine höhere Übertragungspriorität als die erste Nachricht auf.

Werden die erste Nachricht und die zweite Nachricht durch das erste Segmentkopplungselement im Wesentlichen gleichzeitig empfangen, wobei beide Nachrichten über die dritte Netzwerkleitung verschickt werden sollen, so muss das Segmentkopplungselement entscheiden welche zuerst verschickt wird, da die zweite Nachricht eine höheren Übertragungspriorität aufweist wird die zweite Nachricht zuerst verschickt und die Übertragung der ersten Nachricht wird verzögert, was durch das Netzwerkgateway nachgebildet wird.

In einer weiteren Ausführungsform wird mittels des Netzwerkgateways ein dritter Netzwerkteilnehmer, der die zweite Nachricht verschickt simuliert. Eine solche vom Netzwerkgateway verschickte Nachricht unterliegt in einer vorteilhaften Ausgestaltung ebenfalls der Verzögerungsnachbildung durch das segmentierte Netzwerk.

In einer anderen Ausführungsform wird die zweite Nachricht von einem vierten Netzwerkteilnehmer über eine vierte Netzwerkleitung an das Netzwerkgateway übertragen.

In einer vorteilhaften Ausgestaltung wird die erste Nachricht von dem Netzwerkgateway vor der Versendung an den zweiten Netzwerkteilnehmer verändert.

Gemäß einer Weiterbildung wird die erste Nachricht in einem ersten Format von dem Netzwerkgateway empfangen und von dem Netzwerkgateway vor der Versendung an den zweiten Netzwerkteilnehmer in ein zweites Format umgewandelt, wobei das erste Format und das zweite Format ein Busproto-koll oder ein Netzwerkprotokoll sein können. Ein Busprotokoll kann beispielsweise ein Protokoll nach einem CAN-Standard, einem LIN-Standard oder einem FlexRay-Standard sein. Ein Netzwerkprotokoll kann beispielsweise ein Protokoll nach einem Ethernet-Format oder nach einem MOST-Format sein.

Es versteht sich, dass das erste Format und das zweite Format im Allgemeinen unterschiedlich sind, da ansonsten eine Umwandlung nicht notwendig ist.

Weiterhin kann die erste Nachricht durch das Netzwerkgateway verändert werden um Fehler in der Übermittlung nachzubilden. So ist es beispielsweise möglich einzelne Bits der Nachricht zu verändern oder wegzulassen oder zusätzliche Bits hinzuzufügen.

Ein Vorteil dieser Erfindung ist es, dass der erste Netzwerkteilnehmer und der zweite Netzwerkteilnehmer Nachrichten in unterschiedlichen Formaten verarbeiten können. So kann beispielsweise der erste Netzwerkteilnehmer die erste Nachricht in einem Ethernet-Format versenden und der zweite Netzwerkteilnehmer die erste Nachricht in einem FlexRay-Format empfangen. Das Netzwerkgateway bildet zusätzlich zu der Laufzeit ein im segmentierten Netzwerk enthaltenes Formatumwandlungsgateway nach.

In einer weiteren Ausführungsform wird eine Kopie der ersten Nachricht von dem Netzwerkgateway auf einer an das Netzwerkgateway angeschlossenen fünften Netzwerkleitung versendet.

Vorteilhaft ist, dass über die Kopie ein Monitoring des Netzwerkverkehrs des segmentierten Netzwerks stattfinden kann. Wenn von allen Nachrichten, die über das Netzwerkgateway übermittelt werden, von dem Netzwerkgateway eine Kopie an eine Monitoringeinheit versendet wird, so ist ein Monitoring an einer zentralen Stelle möglich, während in dem segmentierten Netzwerk für ein vollständiges Monitoring Kopien an einer Vielzahl von Stellen erzeugt werden müssten.

In einer weiteren Ausführungsform ist das erste Segmentkopplungselement und/oder das zweite Segmentkopplungselement ein Hub oder ein Switch oder ein Gateway.

Vorteilhaft ist, dass Hubs, Switche und Gateway bekannte Formen von Segmentkopplungselementen sind, deren Verarbeitungszeit von Nachrichten bekannt ist oder sich nachmessen lässt. Die durch diese Segmentkopplungselemente entstehenden Laufzeitverzögerungen lassen sich daher durch das Netzwerkgateway gut nachbilden.

In einer vorteilhaften Ausführungsform wird die Verzögerung des ersten Segmentkopplungselements und/oder des zweiten Segmentkopplungselements und/oder der dritten Netzwerkleitung an einem oder mehreren realen Bauteilen gemessen und die gemessene Verzögerung in der Nachbildung der Verzögerung durch das Netzwerkgateway berücksichtigt. Alternativ werden die Verzögerungen des ersten Segmentkopplungselements und/oder des zweiten Segmentkopplungselements und/oder der dritten Netzwerkleitung simuliert und aus den Messungen und/oder Simulationen die nachzubildende Verzögerung der ersten Nachricht direkt bestimmt oder berechnet.

Weiterhin betrifft die Erfindung ein Netzwerkgateway zur Nachbildung von Laufzeiten, wobei das Netzwerkgateway mit einer ersten Netzwerkleitung und einer zweiten Netzwerkleitung verbunden ist, wobei das Netzwerkgateway eine erste Nachricht über die erste Netzwerkleitung empfängt und über die zweite Netzwerkleitung versendet, wobei das Netzwerkgateway derart eingerichtet ist die erste Nachricht zu verzögern, dass Zeit von dem Empfang der ersten Nachricht durch das Netzwerkgateway bis zu der Versendung der ersten Nachricht durch das Netzwerkgateway im Wesentlichen der Laufzeit der ersten Nachricht durch ein segmentiertes Netzwerk entspricht, wobei das segmentierte Netzwerk wenigstens ein erstes Segmentkopplungselement und ein zweites Segmentkopplungselement und eine mit dem ersten Segmentkopplungselement und dem zweiten Segmentkopplungselement verbundene dritte Netzwerkleitung umfasst.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigt:
- Figur 1: eine schematische Ansicht eines Netzwerkes mit einem erfindungsgemäßen Netzwerkgateway,
- Figur 2: eine schematische Ansicht eines segmentierten Netzwerkes,
- Figur 3: eine schematische Ansicht eines weiteren segmentierten Netzwerkes,
- Figur 4: eine schematische Ansicht eines Netzwerkes mit einem erfindungsgemäßen Netzwerkgateway und einer Monitoringeinheit,
- Figur 5: eine Vergleich von Laufzeiten in unterschiedlichen Netzwerken.

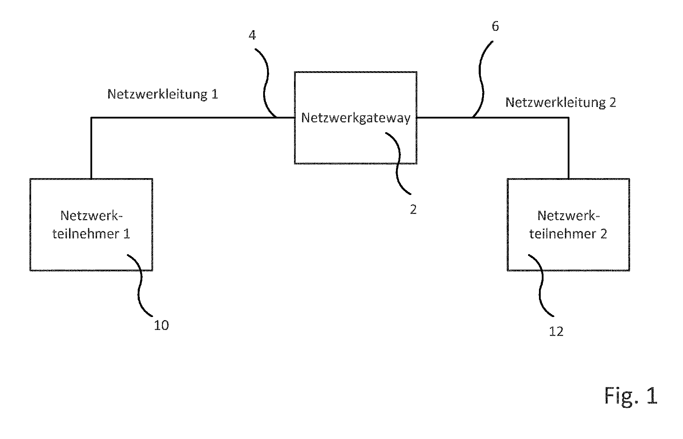

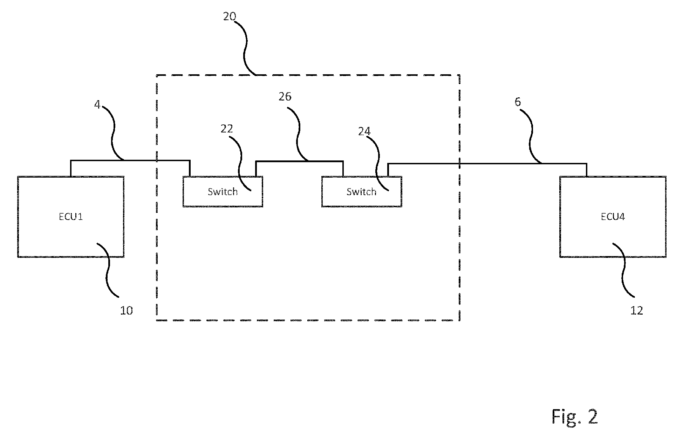

Die Abbildung der Figur 1 eine schematische Ansicht eines Netzwerkes mit einem erfindungsgemäßen Netzwerkgateway. An das erfindungsgemäße Netzwerkgateway 2 sind über eine erste Netzwerkleitung 4 ein erster Netzwerkteilnehmer 10 und über eine zweite Netzwerkleitung 6 ein zweiter Netzwerkteilnehmer 12 verbunden. Eine erste Nachricht, die vom ersten Netzwerkteilnehmer 10 an den zweiten Netzwerkteilnehmer geschickt wird, wird zunächst vom ersten Netzwerkteilnehmer 10 über die erste Netzwerkleitung 4 an das Netzwerkgateway 2 übermittelt und dann vom Netzwerkgateway 2 über die zweite Netzwerkleitung 6 an den zweiten Netzwerkteilnehmer 12 übermittelt. Das Netzwerkgateway 2 speichert dabei die erste Nachricht zwischen und verzögert die Übermittlung zum zweiten Netzwerkteilnehmer 12 so, dass die zwischen dem Empfang der ersten Nachricht durch das Netzwerkgateway 2 und der Versendung durch das Netzwerkgateway 2 der Laufzeit durch ein segmentiertes Netzwerk entspricht. Das Netzwerkgateway bildet also die Laufzeit durch ein segmentiertes Netzwerk nach. Ein Beispiel für ein segmentiertes Netzwerk 20, dessen Laufzeiten von einem erfindungsgemäßen Netzwerkgateway 2 nachgebildet wird, ist in Figur 2 gezeigt. Das segmentierte Netzwerk kann prinzipiell beliebig gestaltet sein und eine Vielzahl von Segmentkopplungselementen, Netzwerkleitungen und Netzwerkteilnehmern enthalten.

In der Abbildung der Figur 2 ist eine schematische Ansicht eines segmentierten Netzwerkes dargestellt. Das segmentierte Netzwerk 20 besteht vorliegend aus einem ersten Segmentkopplungselement 22, einem zweiten Segmentkopplungselement 24, einer dritten Netzwerkleitung 26 die das erster Segmentkopplungselement 22 und das zweite Segmentkopplungselement 24 miteinander verbindet. An das segmentierte Netzwerk sind der erste Busteilnehmer 10 über die erste Netzwerkleitung 4 und der zweite Busteilnehmer 12 über die zweite Netzwerkleitung 6 angeschlossen. Dabei wird der erste Netzwerkteilnehmer 10 über die erste Netzwerkleitung 4 mit dem ersten Segmentkopplungselement 22 verbunden und der zweite Netzwerk-teilnehmer 12 über die zweite Netzwerkleitung 6 mit dem zweiten Segmentkopplungselement verbunden.

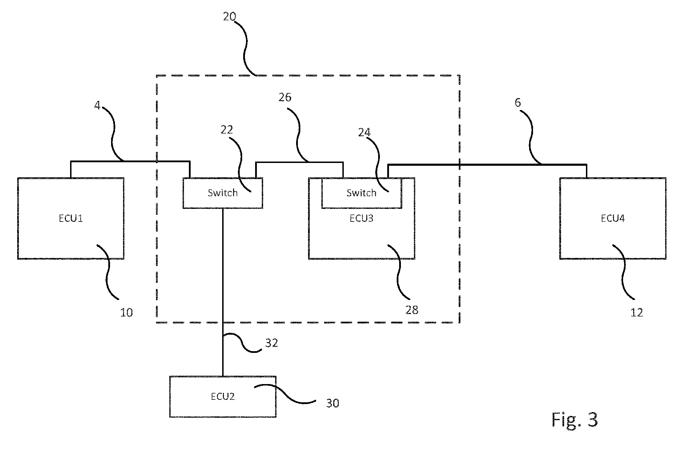

Figur 3 zeigt eine schematische Ansicht eines weiteren segmentierten Netzwerkes. Im Folgenden werden nur die Unterschiede zu der Abbildung der Figur 2 erläutert. Das segmentierte Netzwerk umfasst zusätzlich einen dritten Netzwerkteilnehmer 28, wobei das zweite Segmentkopplungselement 24 hier ein Teil des dritten Netzwerkteilnehmers 28 ist. An das segmentierte Netzwerk ist ein vierter Netzwerkteilnehmer 30 angeschlossen, wobei der vierte Netzwerkteilnehmer 30 über eine vierte Netzwerkleitung 32 mit dem ersten Segmentkopplungselement 22 verbunden ist.

Eine zweite Nachricht, die vom vierten Netzwerkteilnehmer 30 an den dritten Netzwerkteilnehmer 28 verschickt wird, wird vom vierten Netzwerkteilnehmer 30 über die vierte Netzwerkleitung 32 an das erste Segmentkopplungselement 22 übertragen. Das erste Segmentkopplungselement 22 verarbeitet die zweite Nachricht und übermittelt die zweite Nachricht über die dritte Netzwerkleitung 26 an das zweite Segmentkopplungselement 24. Da das zweite Segmentkopplungselement 24 hier ein Teil des dritten Netzwerk-teilnehmers 28 ist, ist die zweite Nachricht damit beim dritten Netzwerkteilnehmer 28 angekommen.

Wenn die erste Nachricht und die zweite Nachricht im Wesentlichen gleichzeitig über das segmentierte Netzwerk 2 übertragen werden sollen, so ist klar, dass sich die Laufzeit zumindest einer Nachricht im Allgemeinen vergrößert, da beide Nachrichten über die dritte Netzwerkleitung 26 übertragen werden müssen und die Übertragungskapazität der dritten Netzwerkleitung 26 im Allgemeinen begrenzt ist. Diese zusätzliche Verzögerung wird von dem erfindungsgemäßen Netzwerkgateway 2 nachgebildet, wenn beide Nachrichten im Wesentlichen gleichzeitig über das Netzwerkgateway 2 übertragen werden sollen.

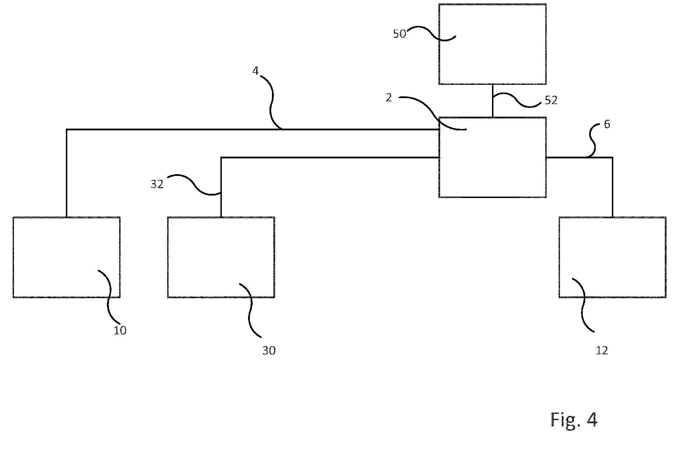

Figur 4 zeigt eine schematische Ansicht eines Netzwerkes mit einem erfindungsgemäßen Netzwerkgateway und einer Monitoringeinheit 50. Im Folgenden werden nur die Unterschiede zu der Abbildung der Figur 1 erläutert. An das erfindungsgemäße Netzwerkgateway 2 der vierte Netzwerkteilnehmer 30 über die vierte Netzwerkleitung 32, und die Monitoringeinheit 50 über eine fünfte Netzwerkleitung 52 angeschlossen. Das Netzwerkgateway 2 kann von jeder Nachricht, die von einem Netzwerkteilnehmer über das Netzwerkgateway 2 verschickt wird eine Kopie über die fünfte Netzwerkleitung 52 an die Monitoringeinheit 50 senden. Dadurch ist es möglich den Netzwerkverkehr an zentraler Stelle zu überwachen und Probleme in der Kommunikation aufzuspüren. Das Netzwerkgateway 2 kann beispielsweise ein segmentiertes Netzwerk 20, wie es in Figur 3 gezeigt ist, nachbilden. Dabei kann das Netzwerkgateway 2 auch den dritten Netzwerkteilnehmer 28 nachbilden und an den dritten Netzwerkteilnehmer 28 adressierte Nachrichten empfangen und anstelle des dritten Netzwerkteilnehmers 28 Nachrichten verschicken.

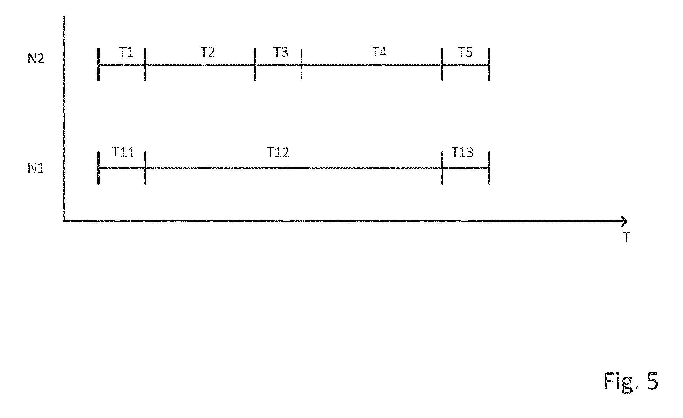

Figur 5 zeigt einen Vergleich unterschiedlicher Laufzeiten von Nachrichten. Entlang der Waagerechten ist die Zeit T aufgetragen. Eine erste Laufzeit N1 zeigt die Laufzeit der ersten Nachricht beispielhaft für die Ausgestaltung der Figur 1. Dabei wird die erste Nachricht von dem ersten Netzwerkteilnehmer 10 zu dem zweiten Netzwerkteilnehmer 12 durch das Netzwerkgateway 2 versendet, wobei das Netzwerkgateway die erste Nachricht erfindungsgemäß verzögert. Die erste Nachricht wird im Zeitraum T11 von dem ersten Netzwerkteilnehmer 10 an das Netzwerkgateway 2 übermittelt, von dem Netzwerkgateway 2 in der Zeit T12 verarbeitet und verzögert und im Zeitraum T12 an den zweiten Netzwerkteilnehmer 12 übermittelt.

Die zweite Laufzeit N2 zeigt die Laufzeit für die erste Nachricht von dem ersten Netzwerkteilnehmer 10 zu dem zweiten Netzwerkteilnehmer 12 beispielhaft für das in Figur 2 gezeigte segmentierte Netzwerk 20. Die erste Nachricht wird zunächst von dem ersten Netzwerkteilnehmer 10 im Zeitraum T1 an das erste Segmentkopplungselement 22 übermittelt. Das erste Segmentkopplungselement 22 verarbeitet die erste Nachricht im Zeitraum T2 und übermittelt die erste Nachricht im Zeitraum T3 an das zweite Segmentkopplungselement 24. Das zweite Segmentkopplungselement 24 verarbeitet die erste Nachricht im Zeitraum T4 und übermittelt die erste Nachricht im Zeitraum T5 an den zweiten Netzwerkteilnehmer 12. Die Laufzeit der ersten Nachricht von dem ersten Netzwerkteilnehmer 10 zu dem zweiten Netzwerkteilnehmer 12 ist also die Summer der Zeiträume T1, T2, T3, T4, T5. Die Summe der Zeiträume T11, T12 und T13 entspricht durch die Verzögerung der ersten Nachricht im Zeitraum T12 im Wesentlichen der Summe der Zeiträume T1, T2, T3, T4 und T5.

## Patentansprüche

1. Verfahren zur Nachbildung von Laufzeiten,
wobei ein erster Netzwerkteilnehmer (10) über eine erste Netzwerkleitung (4) mit einem Netzwerkgateway (2) verbunden wird und ein zweiter Netzwerkteilnehmer (12) über eine zweite Netzwerkleitung (6) mit dem Netzwerkgateway (2) verbunden wird, wobei der erste Netzwerkteilnehmer (10) eine erste, an den zweiten Netzwerkteilnehmer (12) adressierte Nachricht über die erste Netzwerkleitung (4) verschickt, wobei von dem Netzwerkgateway (2) die erste Nachricht über die erste Netzwerkleitung (4) empfangen wird und an den zweiten Netzwerkteilnehmer (12) über die zweite Netzwerkleitung (6) versendet wird, wobei von dem zweiten Netzwerkteilnehmer (12) die erste Nachricht über die zweite Netzwerkleitung (6) empfangen wird,
**dadurch gekennzeichnet, dass**
die erste Nachricht mittels des Netzwerkgateways (2) derart verzögert wird, dass eine erste Laufzeit (N1) der ersten Nachricht von dem ersten Netzwerkteilnehmer (10) zu dem zweiten Netzwerkteilnehmer (12) im Wesentlichen einer zweiten Laufzeit (N2) der ersten Nachricht durch ein segmentiertes Netzwerk (20) entspricht, wobei das segmentierte Netzwerk (20) wenigstens ein erstes Segmentkopplungselement (22) und ein zweites Segmentkopplungselement (24) und eine mit dem ersten Segmentkopplungselement (22) und dem zweiten Segmentkopplungselement (24) verbundene dritte Netzwerkleitung (26) umfasst.

2. Verfahren nach Anspruch 1, **dadurch gekennzeichnet, dass** bei der Verzögerung der ersten Nachricht die Verarbeitungszeit der ersten Nachricht durch die Segmentkopplungselemente berücksichtigt wird.

3. Verfahren nach Anspruch 1 oder 2, **dadurch gekennzeichnet, dass** bei der Verzögerung der ersten Nachricht die Laufzeit der ersten Nachricht zwischen den Segmentkopplungselementen berücksichtigt wird.

4. Verfahren nach einem der vorstehenden Ansprüche, **dadurch gekennzeichnet, dass** das segmentierte Netzwerk ein Ethernetnetzwerk umfasst.

5. Verfahren nach einem der vorstehenden Ansprüche, **dadurch gekennzeichnet, dass** in dem segmentierten Netzwerk zwischen dem ersten Kopplungselement und dem zweiten Kopplungselement eine zweite Nachricht übertragen wird und von dem Netzwerkgateway bei der Verzögerung der ersten Nachricht eine zusätzliche Verzögerung durch die Übertragung der zweiten Nachricht berücksichtigt wird.

6. Verfahren nach Anspruch 5, **dadurch gekennzeichnet, dass** die zweite Nachricht eine höhere Übertragungspriorität als die erste Nachricht aufweist.

7. Verfahren nach Anspruch 5 oder 6, **dadurch gekennzeichnet, dass** mittels des Netzwerkgateways ein dritter Netzwerkteilnehmer, der die zweite Nachricht verschickt simuliert wird.

8. Verfahren nach Anspruch 5 oder 6, **dadurch gekennzeichnet, dass** die zweite Nachricht von einem vierten Netzwerkteilnehmer über eine vierte Netzwerkleitung an das Netzwerkgateway übertragen wird.

9. Verfahren nach einem der vorstehenden Ansprüche, **dadurch gekennzeichnet, dass** die erste Nachricht von dem Netzwerkgateway vor der Versendung an den zweiten Netzwerkteilnehmer verändert wird.

10. Verfahren nach Anspruch 9, **dadurch gekennzeichnet, dass** die erste Nachricht in einem ersten Format von dem Netzwerkgateway empfangen wird und von dem Netzwerkgateway vor der Versendung an den zweiten Netzwerkteilnehmer in ein zweites Format eines Busprotokolls oder Netzwerkprotokolls umgewandelt.

11. Verfahren nach einem der vorstehenden Ansprüche, **dadurch gekennzeichnet, dass** eine Kopie der ersten Nachricht von dem Netzwerkgateway auf einer an das Netzwerkgateway angeschlossenen fünften Netzwerkleitung versendet wird.

12. Verfahren nach einem der vorstehenden Ansprüche, **dadurch gekennzeichnet, dass** das erste Segmentkopplungselement und/oder das zweite Segmentkopplungselement ein Hub oder ein Switch oder ein Gateway ist.

13. Verfahren nach einem der vorstehenden Ansprüche, **dadurch gekennzeichnet, dass** die Verzögerung des ersten Segmentkopplungselements und/oder des zweiten Segmentkopplungselements und/oder der dritten Netzwerkleitung an einem oder mehreren realen Bauteilen gemessen wird und die gemessene Verzögerung in der Nachbildung der Verzögerung durch das Netzwerkgateway berücksichtigt wird.

14. Netzwerkgateway zur Nachbildung von Laufzeiten,
wobei das Netzwerkgateway mit einer ersten Netzwerkleitung und einer zweiten Netzwerkleitung verbunden ist, wobei das Netzwerkgateway eine erste Nachricht über die erste Netzwerkleitung empfängt und über die zweite Netzwerkleitung versendet,
**dadurch gekennzeichnet, dass**
das Netzwerkgateway derart eingerichtet ist die erste Nachricht zu verzögern, dass Zeit von dem Empfang der ersten Nachricht durch das Netzwerkgateway bis zu der Versendung der ersten Nachricht durch das Netzwerkgateway im Wesentlichen der Laufzeit der ersten Nachricht durch ein segmentiertes Netzwerk entspricht, wobei das segmentierte Netzwerk wenigstens ein erstes Segmentkopplungselement und ein zweites Segmentkopplungselement und eine mit dem ersten Segmentkopplungselement und dem zweiten Segmentkopplungselement verbundene dritte Netzwerkleitung umfasst.
